# EUROPEAN PATENT APPLICATION

(11) **EP 1 304 632 A1**
(43) Date of publication of application: **23.04.2003**
(21) Application number: 01830657.1
(22) Date of filing: 18.10.2001
(51) Int. Cl.: G06F 17/60

(54) **System for remote purchasing of products or services by a user**

(71) Applicant: Gestweb S.p.A., 25124 Brescia (IT)
(72) Inventor: Vinati, Felice, 25069 Villa Carcina (Brescia) (IT); Vinati, Samuele, 25123 Brescia (IT); Vinati, Matteo, 25045 Castegnato (Brescia) (IT); Perlotti, Edoardo, 25100 Brescia (IT)
(74) Representative: Parisi, Luigi

(57) **Abstract**

A system for remote purchasing of products or services by a user, comprising:
means (2) for acquiring identification codes (3) of products or services that the user wishes to purchase;
means (6) for storing the identification codes in order to create a list of products or services that the user wishes to purchase;
data transmission/reception means (7), suitable to transmit the list of products or services that the user wishes to purchase to a supplier (5) of products or services;
the transmission/reception means (7) being connected to the supplier by means of a telephone network and/or a data communications network (8, 9).

## Description

The present invention relates to a system for remote purchasing of products or services by a user. More particularly, the invention relates to a system for remote purchasing of products, such as for example food products, by a user, while remaining comfortably in his own home and without therefore having to go to the point of sale.

It is known that various systems are currently available for the remote purchasing of products, particularly food products, at supermarkets and the like, and these systems can be performed by accessing a data communications network such as for example the Internet. In such cases, the user who wishes to make a purchase connects, via the Internet, to the dedicated site of the point of sale and, by navigating within this site, makes all the purchases he requires and then sends the order for the purchases made, with payment by credit card.

The point of sale, after receiving the order, completes it and delivers the shopping directly to the user's home.

Although this system is unquestionably convenient for the user, it is affected by some drawbacks.

First of all, the main drawback is that it is necessary to own a personal computer with an Internet connection and therefore know how to use the Internet.

A second drawback is that the user, even if he is capable of using a personal computer and of connecting to the Internet, takes considerable time to do his shopping, since he has to navigate within the site of the point of sale and choose in each instance the products, having to view them before making the purchase. Shopping done in this manner therefore requires a considerable amount of time, which is substantially equal to the time that the user would take to shop directly at the point of sale; the only convenience is therefore that one does not have to leave one's home.

Further, in the case of elderly people, who are the people most interested in a service of this kind due to problems with walking and the like, the need to use a personal computer is a substantially insurmountable obstacle.

The aim of the present invention is to provide a system for remote purchasing of products or services by a user that does not require the use of a personal computer and of a data network connection.

Within this aim, an object of the present invention is to provide a system for remote purchasing of products by a user that allows the user to make the purchases comfortably from his own home, with a high speed of operation.

Another object of the present invention is to provide a system for remote purchasing of products by a user that allows the user to make purchases offline, i.e., without a connection to a telephone network, data communications network or other network, and then connect at a later time after product selection has been performed.

Another object of the present invention is to provide a system for remote purchasing of products by a user that is highly reliable, relatively simple to provide and at competitive costs.

This aim and these and other objects that will become better apparent hereinafter are achieved by a system for remote purchasing of products or services by a user, characterized in that it comprises:
means for acquiring identification codes of products or services that the user wishes to purchase;
means for storing said identification codes in order to create a list of products or services that the user wishes to purchase;
data transmission/reception means, suitable to transmit said list of products or services that the user wishes to purchase to a supplier of products or services;
said transmission/reception means being connected to said supplier by means of a telephone network and/or a data communications network.

Further characteristics and advantages of the invention will become better apparent from the description of preferred but not exclusive embodiments of the system according to the invention, illustrated only by way of non-limitative example in the accompanying drawings, wherein:
Figure 1 is a block diagram of the system according to the present invention; and
Figure 2 is a flowchart of the method for using the system according to the present invention.

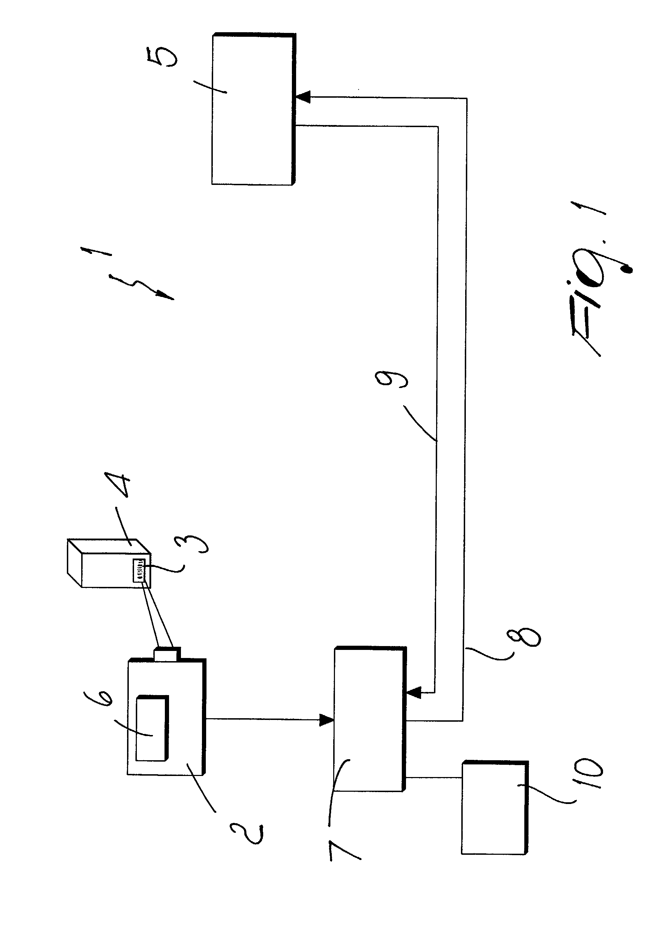

With reference to the figures, and initially with reference to Figure 1, the system according to the present invention, generally designated by the reference numeral 1, comprises means 2 for reading bar codes, which are conveniently suitable to read bar codes 3 applied to products 4 that the user wishes to purchase and can find either directly in his own home or acquire from a catalog sent by a supplier 5 of products to the user's home.

The means for acquiring bar codes 3 are conveniently provided with memory means 6, suitable to store the bar codes of the products read by the user.

The means for acquiring bar codes can be conveniently constituted, for example, by a light pen combined with a base element 7 connected to the telephone network or to the Internet. The base element 7 constitutes means for data transmission/reception and can be integrated directly in the light pen 2.

In the case of a connection to the telephone network, said network can be the GSM, GPRS, UMTS network or the normal fixed telephone network by means of a modem.

In Figure 1, the reference numeral 8 designates the connection between the base 7 and the supplier 5 by means of a telephone network or a data communications network such as for example the Internet.

The reference numeral 9 instead designates the connection, again by means of the same network designated by the reference numeral 8, that connects the supplier 5 to the base 7 of the user.

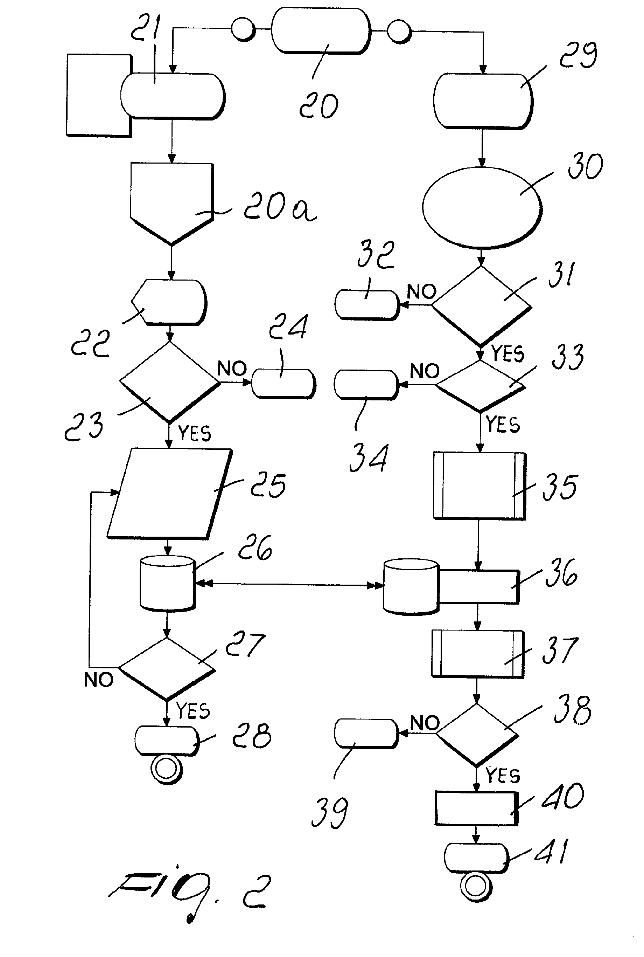

With reference therefore to Figure 1 and to Figure 2, which is a detail view of a flowchart of the method for using the system according to the present invention, the operation of the system is as follows.

First of all, the user switches on his light pen 2 and, by means of an offline operation, acquires the data by means of the light pen or other suitable means, reading the bar code or other identification element applied directly to the package of the product or to an appropriately provided list that is available to the user.

The code that identifies the product 4 can be read at any time by the user, and the read data are stored in the memory means 6 of the light pen 2.

The next step entails, by means of an online connection to the service supplier 5, the transmission of data over a connection via a data communications network or telephone network 8 and 9, to the system of the supplier or supermarket or other service supplier.

The message that is sent by the base 7 of the user also comprises a user identification code and the caller's number. The transmission of the data entails the subsequent processing, on the part of the service supplier 5, of the purchase total and the consequent transmission to the user in order to confirm said total.

Confirmation subsequently entails completion of the order, i.e., delivery of the products ordered by the user.

The confirmation can also be transmitted to a bank for a corresponding charge to the user's current account.

As an alternative, the base 7 can also be provided with means 10 suitable to read prepaid cards, credit cards, or any other suitable payment means.

Moreover, the base 7, when switched on, can also receive voice messages directly from the service supplier 5.

Figure 2 is a detail view of the flowchart of the method for using the system according to the present invention.

The flowchart is divided into two separate branches, which can be activated independently of each other. In particular, a first step 20 for starting the system is followed by a step 20a for starting the data acquisition system, i.e., the means 2 for acquiring the product identification codes read directly on the package of the product or on lists bearing said codes.

Data input, steps 21 and 22, is thus performed offline and the data are stored in the memory means 6 of the means 2 for acquiring identification codes 3 of the products 4.

The system, step 23, then requires confirmation of data input: if said confirmation is not provided, this is followed by the stop step 24; if the confirmation is given, this is followed by a step 25 for acquisition of the data by means of the light pen or equivalent means for reading the product identification code, the specification of a data file 26, stored as mentioned in the memory means 6, and a step 27 for ending data input; if an affirmative response is given, the process stops, step 28; if a negative response is given, control returns to the step 25 for acquiring data by means of the light pen 2.

Once the data acquisition step has been performed, left branch of the flowchart of Figure 2, it is possible to perform the process related to the right branch of the flowchart of said figure.

In this case, the data transmission/reception base 7 is started, step 29, and this is followed by a step 30 for confirming the operation and sending the data, followed by a further step 31, in which a user identification code is requested.

If said code is not provided to the base 7, the process stops, step 32.

Otherwise, step 33, confirmation to send the data to the service supplier 5 is requested.

If this request is not met, the stop step 34 follows.

Otherwise, step 35, the base 7 calls the service supplier 5, by means of the fixed telephone network or by means of a cellular telephone network or by means of a dedicated data communications network or the Internet.

This is followed by a step 36 for sending the data, which are taken from the data file 26, and a step 37 in which the service supplier 5 waits for a message by means of which the user confirms the sending of his order.

This is followed by a step 38 in which the user is requested to confirm the sending of his order. This step 38 can receive a negative reply, which is then followed by a system stop step 39, or an affirmative reply, which is accordingly followed by a step 40 for sending the sent order confirmation data and by a step 41 for stopping the connection and the system in general.

Substantially, it is evident that the method that uses the system according to the invention allows the user to remain online only when he wishes to transmit the data related to the purchases that he wishes to make, without having to remain connected to the service supplier when he instead wishes, without being hurried, to choose the products that he wishes to order from the service supplier 5.

The connection between the base 7 and the service supplier 5 can therefore occur, as mentioned, over a fixed telephone network, a cellular telephone network, or a data communications network. However, if a data communications network is used, the connection procedure is absolutely not visible to the user, who therefore does not have to navigate in an appropriately provided site. The connection is performed automatically by the base 7 available to the user, who is therefore not forced to own a personal computer to make purchases from the service supplier 5, as currently occurs in systems of the known type.

In order to purchase a plurality of units of a same product, the user simply has to read the bar code or other identification code placed on the product as many times as the number of products that he wishes to purchase.

Data acquisition therefore occurs offline, and the user can perform the acquisition even in separate instances, storing the acquired data in the memory means 6.

The use of the product identification code acquisition means can be extended, for example, not only to food products but also to banking operations that are simple to perform, such as for example paying bills, confirming the payment of purchases, and the like.

Substantially, the system according to the present invention allows a user to make purchases freely, for example in a supermarket, from his own home, without having the place the order all at once, with the ability to decide which products to purchase in separate instances, subsequently sending the list of requested products in a single session to the supplier 5, who requests confirmation of the sent order and, following reception of this confirmation, delivers the requested products to the user.

Further, the system according to the invention can be very useful for blind and visually impaired people, if the product identification code is provided so that it can be easily identified by touch.

In practice it has been observed that the system according to the present invention fully achieves the intended aim and objects, since it allows a user to perform remotely purchases, for example in a supermarket, without having to own a personal computer and an access to the Internet.

The system thus conceived is susceptible of numerous modifications and variations, all of which are within the scope of the inventive concept; all the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for remote purchasing of products or services by a user, **characterized in that** it comprises:
means for acquiring identification codes of products or services that the user wishes to purchase;
means for storing said identification codes in order to create a list of products or services that the user wishes to purchase;
data transmission/reception means, suitable to transmit said list of products or services that the user wishes to purchase to a supplier of products or services;
said transmission/reception means being connected to said supplier by means of a telephone network and/or a data communications network.

2. The system according to claim 1, **characterized in that** said transmission/reception means are connected to said supplier by means of a fixed telephone network.

3. The system according to claim 1, **characterized in that** said transmission/reception means are connected to said supplier by means of a cellular telephone network.

4. The system according to claim 1, **characterized in that** said transmission/reception means are connected to said supplier by means of the Internet data communications network.

5. The system according to one or more of the preceding claims, **characterized in that** said means for acquiring the identification code of a product comprise a light pen.

6. The system according to one or more of the preceding claims, **characterized in that** said light pen comprises said data transmission/reception means.

7. The system according to one or more of the preceding claims, **characterized in that** said light pen can be connected to said data transmission/reception means, in order to download the list of products stored therein, so as to allow said data transmission/reception means to send said list of products to said supplier.

8. The system according to one or more of the preceding claims, **characterized in that** said product identification code is a bar code.

9. A method for using a system for remote purchasing of products by a user, according to one or more of the preceding claims, **characterized in that** it comprises the steps of:
acquiring, by means of said data acquisition means, identification codes of products that the user wishes to purchase;
transmitting said list of products that the user wishes to purchase from said product code acquisition means to said transmission/reception means;
activating a connection between said data transmission/reception means and said product supplier;
sending to said product supplier said list of products that the user wishes to purchase; and
confirming, following a confirmation request sent by said product supplier, the order placed by said user.

10. The method according to claim 9, **characterized in that** said step of sending said data from said transmission/reception means to said supplier comprises the steps of:
entering a user identification code; and
confirming the sending of said data.

11. The method according to claim 9, **characterized in that** it further comprises the step of sending to said supplier, in addition to said list of products, an identification code of the user who placed the order and the telephone number of the user.

12. The method according to one or more of claims 9 to 11, **characterized in that** said step for connection between said transmission/reception means and said supplier occurs by means of a telephone network.

13. The method according to claim 12, **characterized in that** said telephone network is the fixed or cellular network.

14. The method according to claim 9, **characterized in that** said step for connection between said transmission/reception means and said supplier is provided by means of a data communications network.
